# EUROPEAN PATENT SPECIFICATION

(11) **EP 3 236 351 B1**
(45) Date of publication and mention of the grant of the patent: **27.06.2018**
(21) Application number: 17166225.7
(22) Date of filing: 12.04.2017
(51) Int. Cl.: G06F 9/44, G06F 8/77, G06F 8/70, G06F 17/30

(54) **IDENTIFYING LOW-QUALITY CODE**
IDENTIFIZIERUNG MINDERWERTIGER CODES
IDENTIFICATION DE CODE DE BASSE QUALITÉ

(30) Priority: 18.04.2016 US 201615131703
(43) Date of publication of application: 25.10.2017
(73) Proprietor: Accenture Global Solutions Limited, Dublin 4 (IE)
(72) Inventor: GONIWADA, Shivakumar Rudrappa, 560061 Karnataka (IN); SHAH, Kartik, MH-400028 Mumbai (IN)
(74) Representative: Swindell & Pearson Limited

(56) References cited:
- US-A1- 2011 197 176

## Description

### BACKGROUND

This specification relates to analyzing and classifying the quality of source code.

Software applications are often developed by teams of software developers that each generate code for particular parts of the applications. For example, a first group may develop code for back-end functions while a second group develops code for front-end functions. In today's programming world, software developers face many challenges, including getting software applications to the market faster, overcoming business challenges to meet customer demands, and using legacy code for new applications. In an attempt to meet these challenges, software developers often develop overly complex code that may result in unpredictable results, results that are harmful to the system in which the code is used, or code that is not easily maintained throughout the life of the application.

US 2011/0197176 A1 discloses a test environment that may include qualitative evaluations of test code used to test application code. Several qualitative evaluations may be determined from analysis of test code in complied or source form, including evaluating descriptive assertions made by the test code, dependency evaluations, cyclomatic complexity evaluations, return value assertions, mutable parameter assertions, and test effectiveness history.

### SUMMARY

This specification describes, among other things, a system that analyzes source code and identifies low-quality groups of source code. Low-quality groups of source code are groups of source code that are likely to hinder software development processes. For example, this kind of source code can be harmful to building, testing, debugging, and refactoring source code. In general, one innovative aspect of the subject matter described in this specification can be embodied in methods that include the actions of receiving a set of code groups that each include source code; for each code group: determining a level of complexity of methods within the source code included in the code group; classifying the code group as a high-complexity code group whenever the level of complexity satisfies a first threshold; determining a number of attributes of other code groups on which members of the code group depend; classifying the code group as a high-dependence code group whenever the number of attributes of other code groups on which members of the code group depends satisfies a second threshold; determining a level of cohesion for the code group based on one or more cohesion metrics; classifying the code group as a low-cohesion code group whenever the level of cohesion satisfies a third threshold; and classifying the code group as a low-quality code group whenever the code group is a high-complexity code group, a high-dependence code group and a low-cohesion code group; and updating a user interface to present data identifying each code group classified as a low-quality code group. Other embodiments of this aspect include corresponding systems, apparatus, and computer programs, configured to perform the actions of the methods, encoded on computer storage devices. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The foregoing and other embodiments can each optionally include one or more of the following features, alone or in combination. In some aspects, each code group can include at least one of (i) an object oriented programming class, (ii) a method, or (iii) a software package.

In some aspects, determining the level of complexity of methods within the source code included in a given code group can include determining a number of occurrences of one or more types of code portions included in the code group based on one or more rules specifying the types of code portions. The one or more rules can include at least one custom rule specified by a user for the set of code groups. The level of complexity of methods within the source code included in the given code group can be based on a weighted value specific to each type of code portion and a number of each code portion included in the code group.

Some aspects include, for each code group, determining a number of attributes of other code groups that are accessed by invoking accessor methods of the code group and classifying the code group as a high-dependence code group whenever the number of attributes of other code groups that are accessed by invoking accessor methods of the code group satisfies a fourth threshold. In some aspects, a member of a given code group depends on an attribute of another code group when the member accesses an attribute of another code group different from the given code group.

In some aspects determining a level of cohesion for the code group based on one or more cohesion metrics comprises determining a number of member pairs in the code group that access at least one attribute of the code group in common and the code group is classified as a low-cohesion code group whenever the number of member pairs in the code group that access at least one attribute of the code group in common satisfies the third threshold. In some aspects, the number of member pairs in the code group that access at least one attribute of the code group in common satisfies the third threshold whenever the number of member pairs in the code group that access at least one attribute of the code group in common is less than or equal to the third threshold.

Particular embodiments of the subject matter described in this specification can be implemented so as to realize one or more of the following advantages. Software developers can be alerted to source code that may be unpredictable or harmful to a computer system prior to the code causing such harm. By analyzing several different attributes of the code and classifying the code based on each attribute, a more accurate and more complete determination can be made as to the quality of the code. A dashboard presentation of the number of code groups that fail to meet one or more quality thresholds can enable software developers to quickly assess the overall quality of an application and identify ways to improve the code of the application. In addition, the dashboard can enable a software developer to quickly view and assess attributes of source code having quality concerns.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example environment in which a code quality analysis system analyzes code and identifies low-quality code groups.
FIG. 2 is a flow chart of an example process for identifying low-quality code groups and updating a user interface to present data identifying the low-quality code groups.
FIG. 3 is a screenshot of an example user interface that presents data identifying low-quality code groups.

Like reference numbers and designations in the various drawings indicate like elements.

### DETAILED DESCRIPTION

This specification describes systems and techniques for analyzing the quality of code, e.g., source code, based on multiple different attributes and classifying the quality of the code based on the analyses. For example, the code can be analyzed based on measures of complexity, dependency, and/or cohesion. Code that is considered to be highly complex, highly dependent, and/or having low cohesion may be considered be low-quality code that presents difficulties in testing, generating appropriate test cases, debugging, and maintaining the code over its lifetime. Such low-quality code can also be unpredictable and harmful to computer systems.

In some implementations, each individual code group is analyzed and classified based on its quality. A code group is a group of related code, such as a method, a class (e.g., an object oriented programming class), or a software package. Each code group can be analyzed based on complexity, dependency, and/or cohesion. In some implementations, each code group that is classified as a high-complexity code group, a high-dependence code group, and a low-cohesion code group may be classified as a low-quality code group. In some implementations, a code group that is classified as one or more of (i) a high-complexity code group, (ii) a high-dependence code group, and (iii) a low-cohesion code group may be classified as a low-quality code group.

A code group that is considered to include complex members (e.g., certain types of complex methods) may be classified as a high-complexity code group. High-complexity code groups are hard to test and may present difficulties in generating test cases that properly test the complex code.

A code group that is considered to be highly dependent on other code groups or other external attributes may be classified as a high-dependence code group. High-dependence code groups increase build times and increase make refactoring code. High-dependence code groups may also be difficult to test as they may require many attributes from other code groups in order to be properly tested.

A code group whose members share few attributes in common may be classified as a low-cohesion code group. Low-cohesion code groups have poor modularity and make the code more difficult to understand, test, and/or reuse in other applications.

As low-quality code groups may be difficult to test and debug, and may be unpredictable and/or harmful to computer systems, users may be alerted to the low-quality code groups. For example, a user interface may be updated to present data identifying the code groups that have been classified as low-quality code groups. In addition, or in the alternative, the user interface may be updated to present data identifying the relative number of low-quality and high-quality code groups of one or more software applications that have been analyzed. In this way, a software developer can more easily assess the overall quality of an application based on multiple different attributes and/or metrics.

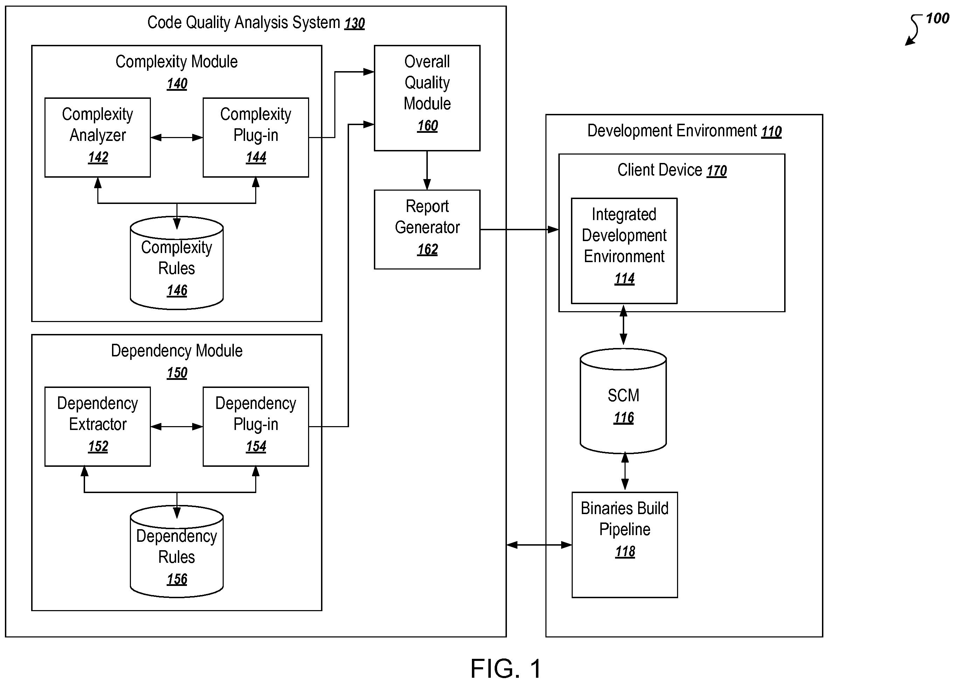

FIG. 1 is a diagram of an example environment 100 in which a code quality analysis system 130 analyzes code and identifies low-quality code groups. The example environment 100 also includes a development environment 110 that enables users, e.g., software developers, to develop software applications. The development environment 110 includes a client device 170, a software configuration management (SCM) data storage device 116, and a binaries build pipeline 118.

The client device 170 is an electronic device that is capable of requesting and receiving data, e.g., over a network. Example client devices include personal computers, mobile communication devices (e.g., smartphones and/or tablet computing devices), and other devices. As described in more detail below, the client device 170 can request an analysis of source code, receive data generated based on the analysis, and present the data using one or more user interfaces.

The client device 170 includes an integrated development environment (IDE) 114. The IDE 114 can include one or more software applications that enable a software developer to develop source code and/or graphical user interfaces for software applications. For example, the IDE 114 may include a source code editor that allows software developers to create and edit source code, a compiler that compiles the source code, and development tools that make it easier for users to generate source code for software applications.

The SCM data storage device 116 stores data related to changes made to software applications. For example, the SCM data storage device 116 can store data related to different versions of software applications. This data can include data specifying changes made to source code for each version of a software application and data specifying the software developer that made the changes.

The binaries build pipeline 118 is a pipeline in which binaries (e.g., executable files, libraries, data files, etc.) are generated, tested, and released to users. A variety of different tests can be performed on the source code and the binaries before a software application or new version of a software application is released. One type of test is a quality test that assesses the quality of source code. For example, the code quality analysis system 130 can be integrated into the binaries build pipeline 118 to assess the quality of source code prior to binaries being created and released.

The code quality analysis system 130 can analyze the quality of code based on several different attributes and metrics. For example, the code quality analysis system 130 may analyze individual code groups based on the several different attributes and metrics and classify the code groups based on the analyses. In a particular example, the code quality analysis system 130 may analyze an individual code group based on complexity, dependency, and cohesion and classify the code group as low-quality or high-quality based on the analyses.

The code quality analysis system 130 includes a complexity module 140 and a dependency module 150. The complexity module 140 can analyze a code group based on its complexity. The complexity module 140 may also classify code groups based on the analysis. For example, the complexity module 140 may classify code groups as either a high-complexity code group, a moderate-complexity code group, or a low-complexity code group based on the code group's complexity. The complexity module 140 can also classify code groups using other classification techniques, e.g., two classifications, more than three classifications, or a score-based classification (e.g., 0-100 based on complexity).

The complexity module 140 includes a complexity analyzer 142, a complexity plug-in 144, and a complexity rules database 146. The complexity analyzer 142 can analyze code of a code group and determine the complexity of the code group based one or more metrics. In some implementations, the complexity analyzer 142 determines a level of complexity of a code group based on the metric(s). The level of complexity may be based on a cyclomatic complexity measure for a code group. The cyclomatic complexity measure may be based on a number of decision points identified in the code group. For example, the cyclomatic complexity measure may be equal to or proportional to the number of decision points plus a constant value (e.g., one). A decision point may be a conditional statement, such as if-then statements, for loops, while loops, do-while statements, and other appropriate conditional statements in source code.

The level of complexity for a class may be based on a total complexity of all members (e.g., all methods) of the class. For example, the level of complexity of a class may be based on a cyclomatic complexity measure of each method included in the class. In this example, the cyclomatic complexity measure of each method may be based on the number of decision points in the method. The level of complexity of the class may be based on a sum of the cyclomatic complexity measures of each method in the class. For example, the level of compexlity of a class may be equal to or proportional to the sum of the cyclomatic complexity measures for the methods in the class.

The cyclomatic analyzer 142 may determine the level of complexity of a code group based on a set of one or more complexity rules stored in a complexity rules database 146. The complexity rules can specify particular types of code that are considered complex. For example, a complexity rule may specify that a for loop is complex. A complexity rule may also have an associated weight for a particular type of code. The weight may be based on the complexity of the particular type of code. For example, more complex code may have a higher associated weight than less complex code.

The complexity rules can include user-defined rules and/or user-defined weights. For example, a software developer may define a rule that specifies that a particular format of code has a particular weight. In another example, a software developer may adjust the weights associated with standard code types, e.g., standard for loops.

The complexity plug-in 144 can enable software developers to define complexity rules and weights for the rules. For example, the complexity plug-in 144 may provide a user interface to the client device 170 or a client device of the development environment 110 that enables software developers to define complexity rules and their associated weights. The complexity plug-in 144 can then store the complexity rules and weights in the complexity rules database 146 for use by the complexity analyzer 142.

The complexity analyzer 142 can use the complexity rules to identify code of the code group that corresponds to (e.g., matches) the complexity rules. The complexity analyzer 142 can provide to the complexity plug-in 144 data specifying the number of code portions that match the code specified by each complexity rule. For example, if a code group includes eight for loops, the complexity analyzer 142 can identify the eight for loops and provide data to the complexity plug-in 144 that specifies that the code group includes eight for loops.

The complexity plug-in 144 can determine the level of complexity for a code group based on the weights associated with code determined to match code specified by the complexity rules. The level of complexity may be based on the number of code portions that match each complexity rule and the weights associated with the complexity rules. For example, if the code analyzer 142 identifies three portions of code in the code group that matches code specified by a rule having a weight of ten, the level of complexity of the code group may be thirty (e.g., 3*10).

The complexity plug-in 144 can also classify the code groups based on the level of complexity determined for the code groups. In some implementations, the complexity plug-in 144 may classify a code group based on a comparison of the level of complexity for the code group to a threshold. If the level of complexity satisfies the threshold (e.g., by meeting or exceeding the threshold), the complexity plug-in 144 may classify the code group as a high-complexity code group. Otherwise, the complexity plug-in may classify the code group as a low-complexity code group or may not classify the code group.

The complexity module 140 can also classify a code group based on the cohesion of the code group. The cohesion of a code group may be based on the number of member pairs (e.g., method pairs) in the code group that access at least one attribute of the code group in common. Two methods that access a common attribute of the code group may be considered a member pair that accesses at least one attribute in common. The attributes may be variables or other elements that store data generated by the code group or used by the code group. For example, a cohesive class may have several methods that use the same variables rather than many methods that all use different variables.

The complexity analyzer 142 can analyze a code group to identify the number of member pairs that access at least one attribute in common and provide data specifying the number to the complexity plug-in 144. The complexity plug-in 144 can then classify the code group based on the number of member pairs that access at least one attribute in common. For example, the complexity plug-in 144 may classify a code group as a low-cohesion code group whenever the number of member pairs in the code group that access at least one attribute of the code group in common satisfies a threshold. The number of member pairs in the code group that access at least one attribute of the code group in common may satisfy the threshold when the number is less than or equal to the threshold. Thus, a code group that has less than the threshold number of member pairs may be classified as a low-cohesion code group. In contrast, a code group that has more than the threshold number of member pairs that access at least one attribute of the code group in common may be classified as a high-cohesion code group or may not be classified.

In some implementations, the complexity plug-in 144 may determine a level of cohesion for a code group based on the number of member pairs in the code group that access at least one attribute of the code group in common and compare the cohesion measure to a threshold. The level of cohesion may also be based on other cohesion metrics, e.g., logical cohesion, temporal cohesion, functional cohesion, and/or other appropriate cohesion measures. The complexity plug-in may then compare the level of cohesion for the code group to a threshold and classify the code group as a low-cohesion code group if the level of cohesion satisfies a threshold (e.g., by being equal to or less than the threshold).

The dependency module 150 can analyze a code group based on its dependence on other code groups and/or attributes from other code groups. The dependency module 150 may also classify code groups based on the analysis. For example, the dependency module 150 may classify code groups as either a high-dependence code group, a moderate dependence code group, or a low-dependence code group based on the code group's dependence on other code groups and/or attributes of other code groups. The complexity module 140 can also classify code groups using other classification techniques, e.g., two classifications, more than three classifications, or a score based classification (e.g., 0-100 based on dependency).

A given code group may depend on another code group if it calls or initiates an instance of another group. A given code group may depend on an attribute (e.g., variable or member) of another code group if the given code group accesses an attribute of the other code group directly or indirectly (e.g., by invoking an accessor method to access the attribute). For example, a given code group may access a variable of another code group by invoking a method to retrieve the value of the variable from the other code group. A variable defined by and/or written to by the given code group may not be considered a dependency of the given code group as it does not depend on a different code group to obtain the value of the variable.

The dependency module 150 includes a dependency extractor 152, a dependency plug-in 154, and a dependency rules database 156. The dependency extractor 152 can analyze code of a code group to identify dependencies of the code group on other code groups. In some implementations, the dependency extractor 152 identifies dependencies specified by one or more dependency rules stored in a dependency rules database 156. Each rule can define a particular type of dependency and/or a weight associated with the dependency. For example, a first rule may specify an access of an attribute of another code group directly and a second rule may specify the initiation of an instance of another code group. The first rule may have a different weight than the second rule, e.g., based on the cost associated with the dependency.

The dependency rules can include user-defined rules and/or user-defined weights. For example, a software developer may define a rule that specifies that a particular dependency has a particular weight. In another example, a software developer may adjust the weights associated with standard dependency types, e.g., direct access of an attribute of another code group.

The dependency extractor 152 can analyze the code of a code group using the dependency rules to identify dependencies in the code group. The dependency extractor 152 can then provide to the dependency plug-in 154 data specifying the number of each type of dependency identified in the code group.

The dependency plug-in 154 can classify code groups based on the dependencies included in the code groups. In some implementations, the dependency plug-in 154 may classify a given code group as a high-dependence code group whenever the number of attributes (e.g., variables or members) of other code groups on which members (e.g., methods) of the given code group depends satisfies a threshold. The number of attributes of other code groups on which members of the code group depends may satisfy the threshold by meeting or exceeding the threshold. If the number attributes of other code groups does not satisfy the threshold, the dependency plug-in 154 may classify the code group as a low-dependence code group or may not classify the code group.

In some implementations the dependency plug-in 154 may determine a level of dependency for a code group and classify the code group based on a level of dependency. For example, the level of dependency may be equal to or proportional to the number of other code groups on which members of the code group depends and/or the number of attributes of other groups on which members of the code group depends. The level of dependency may also be based on the types of dependencies identified in a code group and/or their associated weights. For example, a code group may include two dependencies of a first type having a weight of two and three dependencies of a second type having a weight of three. In this example, the level of dependency may be based on a product of the number of each type of dependency and its weight. That is, the level of dependency may be 2*3 + 3*3 = 15. The dependency plug-in 154 may classify the code group as a high-dependence code group if the level of dependency satisfies a threshold (e.g., by meeting or exceeding the threshold).

The level of dependency for a code group may be based on other dependency metrics, such as the average number of interface members of the code group that are used by another code group. This average number of interface members can be determined by identifying the number of members (e.g., methods) of the code group that are used by other code groups and dividing by the total number of code groups in a project. For example, the average number of interface members for a given class may be determined by identifying the number of methods of the given class used by other classes and dividing the number of methods by the total number of classes in the software application. The level of dependency for a given code group may also be based on a number of other code groups in which attributes of the other code groups accessed by the given code group are defined, the number of functional public methods of a software application divided by the total number of public members of the software application, and/or other appropriate dependency metrics.

In some implementations, the dependency plug-in 154 may classify a code group as a high-dependence code group whenever the number of attributes of other code groups that are accessed by invoking accessor methods of the code group satisfies a threshold. For example, a class may use accessor methods to access variables of another code group. If the number of attributed accesses in this manner exceeds a threshold, the class may be considered a high-dependence code group.

The code quality analysis system 130 also includes an overall quality module 160 and a report generator 162. The overall quality module 160 can classify code groups based on data received from the complexity plug-in 144 and the dependency plug-in 154. For example, the complexity plug-in 144 can provide to the overall quality module 160 data identifying each code group that has been classified as a high-complexity code group and each code group that has been classified as a low-cohesion code group. The complexity plug-in 144 can also provide to the overall quality module 160 data identifying the code groups that have not been classified as a high-complexity code group or as a low-cohesion code group. Or, the complexity plug-in 144 can provide to the overall quality module 160 data identifying each analyzed code group and their respective classifications (if any).

Similarly, the dependency plug-in 154 can provide to the overall quality module 160 data identifying each code group that has been classified as a high-dependence code group. The dependency plug-in 154 can also provide to the overall quality module 160 data identifying the code groups that have not been classified as a high-dependence code group. Or, the dependency plug-in 154 can provide to the overall quality module 160 data identifying each analyzed code group and their respective classifications (if any).

The overall quality module 160 can classify code groups as high-quality code group or a low-quality code group based on the classifications of the code groups. For example, the overall quality module 160 may classify a code group as a low-quality code group whenever the code group is a high-complexity code group, a high-dependence code group, and a low-cohesion code group. In another example, the overall quality module 160 may classify a code group as a low-quality code group whenever the code group has at least two of the three classifications (e.g., classified as a high-dependence code group and a low-cohesion code group, but not a high-complexity code group). Code groups that are not classified as low-quality code group may be classified as a high-quality code group.

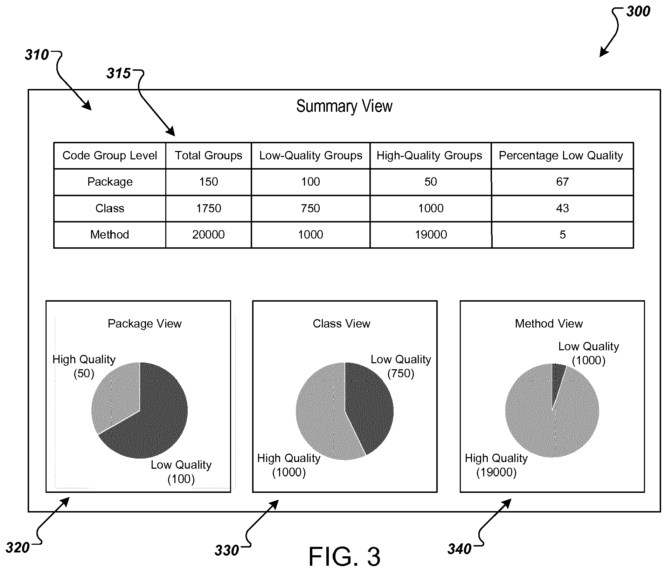

The report generator 162 generates reports and updates user interfaces of client devices based on the complexity, cohesion, and/or dependencies of code groups. For example, the report generator 162 may generate a user interface that presents data identifying each code group classified as being a high-complexity code group, each code group classified as being a low-cohesion code group, each code group classified as being a high-dependence code group, and/or each code group classified as being a low-quality code group. The report generator 162 may also generate a report or update a user interface that presents data illustrating the relative number of low and high-quality code groups at each level (e.g., methods, classes, and packages). An example user interface that presents such data is illustrated in FIG. 3 and described below.

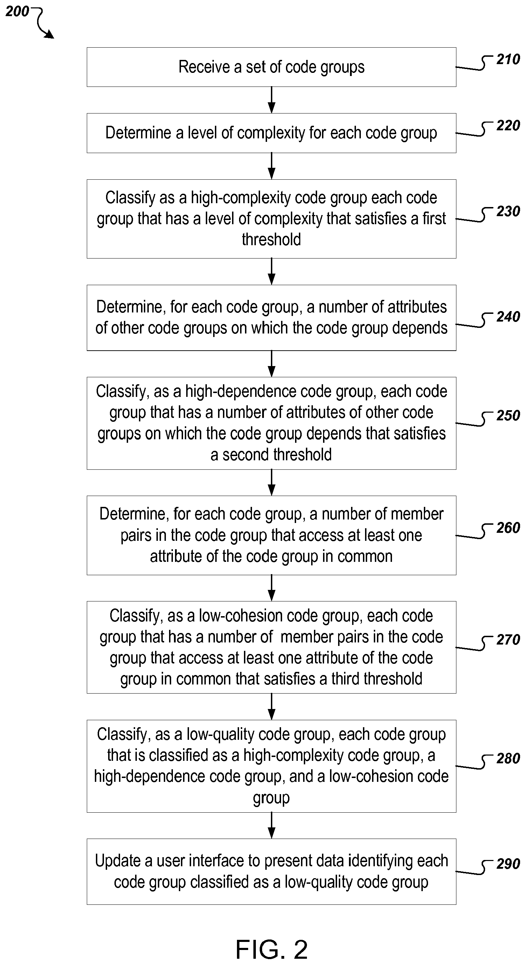

FIG. 2 is a flow chart of an example process 200 for identifying low-quality code groups and updating a user interface to present data identifying the low-quality code groups. The process 200 can be implemented by one or more computer programs installed on one or more computers. The process 200 will be described as being performed by an appropriately programed system of one or more computers, e.g., the code quality analysis system 130 of FIG. 1.

The system receives a set of code groups (210). The code groups may be methods, classes, packages, or other appropriate code groups. The code groups may be part of a common project, such as a common software application. The system may retrieve the code groups in response to a user request to analyze the quality of the code groups. For example, the user may specify to the system a location where source code is stored and request that the code groups of the source code be analyzed. In response, the system may retrieve the source code and extract each code group from the source code.

The system determines, for each code group, a level of complexity of methods within the source code included in the code group (220). As described above, the level of complexity may be based on the type of code (e.g., for loops, while loops, etc.), the number of each type of code included in the code group, and/or weights associated with each type of code. The system can determine the level of complexity for each code group using rules that may include user-defined rules and/or user-defined weights. For example, the system can use the rules to identify particular portions of code that match code defined by the rules as being complex. The system can then determine the level of complexity based on the number of code portions that match the code specified by each rule and the weight associated with each rule. For example, the level of complexity of methods within a code group may be based on a product of the number of code portions of the code group that match the code specified by a rule and the weight associated with the rule. The products for each rule can then be combined (e.g., by adding) to determine the level of complexity for the code group. For example, if the system identifies three code portions in the code group that matches code specified by a first rule having a weight of ten and two code portions in the code group that matches code specified by a second rule having a weight of five, the level of complexity of the code group may be forty (e.g., 3*10 + 2*5).

The system classifies as a high-complexity code group each code group that has a level of complexity that satisfies a first threshold (230). For example, the system may compare the level of complexity of each code group to the first threshold. If a code group has a level of complexity that satisfies the first threshold (e.g., by meeting or exceeding the first threshold, the system may classify the code group as a high-complexity code group.

The system determines, for each code group, a number of other code groups on which the code group depends (240). As described above, a given code group may depend on an attribute (e.g., variable or member) of another code group if the given code group accesses an attribute of the other code group directly or indirectly (e.g., by invoking an accessor method to access the attribute). In some implementations, the system analyzes the code of a code group using one or more dependency rules to identify dependencies in the code group. The system can then identify the number of attributed of other code groups on which the code group depends based on the identified dependencies.

The system classifies, as a high-dependence code group, each code group that has a number of attributes of other code groups on which the code group depends that satisfies a second threshold (250). For example, the system may compare the number of attributes of other code groups on which a given code group depends to second first threshold. If a given code group has a number of attributes that satisfies the second threshold (e.g., by meeting or exceeding the second threshold), the system may classify the code group as a high-dependence code group. In some implementations, the system may compare a level of dependency for a code group to the second threshold. The level of dependency can be based on one or more dependency metrics as described above.

The system determines, for each code group, a number of member pairs (e.g., method pairs) in the code group that access at least one attribute of the code group in common (260). As described above, two methods that access a common attribute of the code group may be considered a member pair that accesses at least one attribute in common. The attributes may be variables or other elements that store data generated by the code group or used by the code group.

The system classifies, as a low-cohesion code group, each code group that has a number of member pairs in the code group that access at least one attribute of the code group in common that satisfies a third threshold (270). For example, the system may compare the number of member pairs for a code group to the third threshold. If a given code group has a number of member pairs that access at least one attribute of the given code group in common that satisfies the third threshold (e.g., by being equal to or less than the third threshold), the system may classify the code group as a low-cohesion code group.

In some implementations, the system may determine a level of cohesion for each code group based on one or more metrics, as described above. The system may then classify each code group that has a level of cohesion that satisfies the third threshold (e.g., by being equal to or less than the threshold) as a low-cohesion code group.

The system classifies, as a low-quality code group, each code group that is classified as a high-complexity code group, a high-dependence code group, and a low-cohesion code group (280). For example, a code group that is a high-complexity code group, a high-dependence code group, and a low-cohesion code group may be considered low-quality as it may be difficult to test or debug, and may be unpredictable or harmful to computer systems. In another example, the system may classify, as a low-quality code group, each code group that has at least two of the three classifications (e.g., classified as a high-complexity code group and a high-dependence code group, but not a low-cohesion code group).

The system updates a user interface to present data identifying each code group classified as a low-quality code group (290). For example, the system may update a user interface of a client device to present data identifying the low-quality code groups, a total number of low-quality code groups, and/or a percentage of the code groups that are classified as low-quality code groups.

The system may also update the user interface of the client device to present data identifying the code groups classified as being high-complexity code groups, high-dependence code groups, and/or low-cohesion code groups. For example, the system may update the user interface to present data identifying high-complexity code groups in response to a selection of a user interface element for high-complexity code group data.

FIG. 3 is a screenshot 300 of an example user interface 310 that presents data identifying low-quality code groups. The user interface 310 may present data identifying low-quality code groups for a particular project, e.g., a particular software application under development. For example, the user interface 310 may be a dashboard user interface that presents a summary of data related to the quality of source code included in the particular project. A user, e.g., a software developer, may drill down into the data to view additional data, as described below.

The user interface 310 includes a table 315 that presents data for package, class, and method code groups. In particular, the table 315 includes data identifying the total number of packages, classes, and methods. The table 315 also includes data identifying the number of low-quality packages, classes, and methods; the number of high-quality packages, classes, and methods, and the percentage of the total number of packages, classes, and methods that are considered low-quality. The data of the table 315 may be determined by classifying the individual code groups as low-quality or high-quality using the techniques described above with reference to FIGS. 1 and 2.

The example user interface 310 also includes a pie chart 320 for the packages, a pie chart 330 for the classes, and a pie chart 340 for the methods. The pie chart 320 presents the relative portion of the packages that are classified as low-quality and as high-quality. Similarly, the pie chart 330 presents the relative portion of the classes that are classified as low-quality and as high-quality and the pie chart 340 presents the relative portion of the methods that are classified as low-quality and as high-quality.

Similar data can be presented for code groups classified based on complexity, cohesion, and/or dependency. For example, the user interface 310 may be updated to present a table and/or pie charts (or other types of charts) for code groups classified as high and low-complexity code groups in response to a user selection of a user interface element for complexity data (not shown). In another example, the user interface 310 may be updated to present a table and/or pie charts for classes in response to a user selection of the pie chart 330.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) monitor, an LCD (liquid crystal display) monitor, or an OLED display, for displaying information to the user, as well as input devices for providing input to the computer, e.g., a keyboard, a mouse, or a presence sensitive display or other surface. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving a set of code groups that each include source code;
for each code group:
determining a level of complexity of methods within the source code included in the code group;
classifying the code group as a high-complexity code group whenever the level of complexity satisfies a first threshold;
determining a number of attributes of other code groups on which members of the code group depend;
classifying the code group as a high-dependence code group whenever the number of attributes of other code groups on which members of the code group depends satisfies a second threshold; and
determining a level of cohesion for the code group based on one or more cohesion metrics;
classifying the code group as a low-cohesion code group whenever the level of cohesion satisfies a third threshold;
classifying the code group as a low-quality code group whenever the code group is a high-complexity code group, a high-dependence code group and a low-cohesion code group; and
updating a user interface (310) to present data identifying each code group classified as a low-quality code group.

2. The method of claim 1, wherein each code group comprises at least one of (i) an object oriented programming class, (ii) a method, or (iii) a software package.

3. The method of claim 1 or 2, wherein determining the level of complexity of methods within the source code included in a given code group comprises determining a number of occurrences of one or more types of code portions included in the code group based on one or more rules specifying the types of code portions.

4. The method of claim 3, wherein the one or more rules include at least one custom rule specified by a user for the set of code groups.

5. The method of claim 4, wherein the level of complexity of methods within the source code included in the given code group is based on a weighted value specific to each type of code portion and a number of each code portion included in the code group.

6. The method of any of the preceding claims, further comprising:
for each code group:
determining a number of attributes of other code groups that are accessed by invoking accessor methods of the code group; and
classifying the code group as a high-dependence code group whenever the number of attributes of other code groups that are accessed by invoking accessor methods of the code group satisfies a fourth threshold.

7. The method of any of the preceding claims, wherein a member of a given code group depends on an attribute of another code group when the member accesses an attribute of another code group different from the given code group.

8. The method of any of the preceding claims, wherein determining a level of cohesion for the code group based on one or more cohesion metrics comprises:
determining a number of member pairs in the code group that access at least one attribute of the code group in common, wherein the code group is classified as a low-cohesion code group whenever the number of member pairs in the code group that access at least one attribute of the code group in common satisfies the third threshold.

9. The method of claim 8, wherein the number of member pairs in the code group that access at least one attribute of the code group in common satisfies the third threshold whenever the number of member pairs in the code group that access at least one attribute of the code group in common is less than or equal to the third threshold.

10. Computer program instructions that, when executed by one or more computers, cause the one or more computers to perform the method of any of the preceding claims.

11. A system (130), comprising:
a data processing apparatus; and
a memory storage apparatus in data communication with the data processing apparatus, the memory storage apparatus storing instructions executable by the data processing apparatus and that upon such execution cause the data processing apparatus to perform operations comprising:
receiving a set of code groups that each include source code;
for each code group:
determining a level of complexity of methods within the source code included in the code group;
classifying the code group as a high-complexity code group whenever the level of complexity satisfies a first threshold;
determining a number of attributes of other code groups on which members of the code group depend;
classifying the code group as a high-dependence code group whenever the number of attributes of other code groups on which members of the code group depends satisfies a second threshold; and
determining a level of cohesion for the code group based on one or more cohesion metrics;
classifying the code group as a low-cohesion code group whenever the level of cohesion satisfies a third threshold;
classifying the code group as a low-quality code group whenever the code group is a high-complexity code group, a high-dependence code group and a low-cohesion code group; and
updating a user interface (310) to present data identifying each code group classified as a low-quality code group.

12. The system of claim 11, wherein execution of the instructions causes the data processing apparatus to perform operations defined in one or more of claims 2 to 9.

## Patentansprüche

1. Computer-implementiertes Verfahren, umfassend:
Empfangen eines Satzes von Codegruppen, die jeweils Quellcode umfassen;
für jede Codegruppe:
Bestimmen einer Stufe an Komplexität von Methoden innerhalb des Quellcodes, der in der Codegruppe enthalten ist;
Klassifizieren der Codegruppe als Hochkomplexitäts-Codegruppe, wenn die Stufe an Komplexität einen ersten Schwellenwert erfüllt;
Bestimmen einer Anzahl an Attributen von anderen Codegruppen, von denen Mitglieder der Codegruppe abhängen;
Klassifizieren der Codegruppe als eine Hochabhängigkeits-Codegruppe, wenn die Anzahl an Attributen von anderen Codegruppen, von denen Mitglieder der Codegruppe abhängen, einen zweiten Schwellenwert erfüllt; und
Bestimmen einer Stufe an Kohäsion für die Codegruppe basierend auf einer oder mehreren Kohäsionsmetriken;
Klassifizieren der Codegruppe als eine Niedrigkohäsions-Codegruppe, wenn die Stufe an Kohäsion einen dritten Schwellenwert erfüllt;
Klassifizieren der Codegruppe als eine Niedrigqualitäts-Codegruppe, wenn die Codegruppe eine Hochkomplexitäts-Codegruppe, eine Hochabhängigkeits-Codegruppe und eine niedrig Kohäsions-Codegruppe ist; und
Aktualisieren einer Benutzerschnittstelle (310) um Daten zu präsentieren, die jede Codegruppe identifizieren, die als eine Niedrigqualitäts-Codegruppe klassifiziert ist.

2. Verfahren nach Anspruch 1, wobei jede Codegruppe wenigstens eines aus (i) einer objektorientierten Programmierungsklasse, (ii) einer Methode oder (iii) einem Softwarepaket umfasst.

3. Verfahren nach Anspruch 1 oder 2, wobei Bestimmen der Stufe an Komplexität von Methoden innerhalb des Quellcodes, der in einer gegebenen Codegruppe enthalten ist, ein Bestimmen einer Zahl an Vorkommen eines oder mehrerer Typen an Codeabschnitten umfasst, die in der Codegruppe enthalten sind, basierend auf einer oder mehreren Regeln, die die Typen von Codeabschnitten spezifizieren.

4. Verfahren nach Anspruch 3, wobei die eine oder mehreren Regeln wenigstens eine benutzerdefinierte Regel umfassen, die von einem Benutzer für den Satz an Codegruppen spezifiziert ist.

5. Verfahren nach Anspruch 4, wobei die Stufe an Komplexität von Methoden innerhalb des Quellcodes, der in der gegebenen Codegruppe enthalten ist, auf einem gewichteten Wert basiert, der spezifisch für jeden Typ von Codeabschnitt ist, und einer Anzahl jedes Codeabschnitts, der in der Codegruppe enthalten ist.

6. Verfahren nach einem der voranstehenden Ansprüche, ferner umfassend:
für jede Codegruppe:
Bestimmen einer Anzahl an Attributen für andere Codegruppen, auf die durch Aufrufen von Zugriffsmethoden der Codegruppe zugegriffen wird; und
Klassifizieren der Codegruppe als eine Hochabhängigkeits-Codegruppe, wenn die Anzahl an Attributen von anderen Codegruppen, auf die durch Aufrufen von Zugriffsmethoden der Codegruppe zugegriffen wird, einen vierten Schwellenwert erfüllt.

7. Verfahren nach einem der voranstehenden Ansprüche, wobei ein Mitglied einer gegebenen Codegruppe von einem Attribut einer weiteren Codegruppe abhängt, wenn das Mitglied auf ein Attribut einer weiteren Gruppe zugreift, die von der gegebenen Codegruppe verschieden ist.

8. Verfahren nach einem der voranstehenden Ansprüche, wobei Bestimmen einer Stufe an Kohäsion für die Codegruppe basierend auf einer oder mehreren Kohäsionsmetriken umfasst:
Bestimmen einer Anzahl an Mitgliedspaaren in der Codegruppe, die auf wenigstens ein Attribut der Codegruppe gemeinsam zugreifen, wobei die Codegruppe als eine Niedrigkohäsions-Codegruppe klassifiziert wird, wenn die Anzahl von Mitgliedspaaren in der Codegruppe, die auf wenigstens ein Attribut der Codegruppe gemeinsam zugreifen, den dritten Schwellenwert erfüllt.

9. Verfahren nach Anspruch 8, wobei die Anzahl an Mitgliedspaaren in der Codegruppe, die auf wenigstens ein Attribut der Codegruppe gemeinsam zugreifen, den dritten Schwellenwert erfüllt, wenn die Anzahl von Mitgliedspaaren in der Codegruppe, die auf wenigstens ein Attribut der Codegruppe gemeinsam zugreifen, kleiner oder gleich dem dritten Schwellenwert ist.

10. Computerprogramm-Instruktionen die, wenn sie durch ein oder mehrere Computer ausgeführt werden, bewirken, dass der ein oder mehrere Computer das Verfahren nach einem der voranstehenden Ansprüche durchführt.

11. System (130), umfassend:
eine Datenverarbeitungsvorrichtung; und
eine Speichervorrichtung in Datenkommunikation mit der Datenverarbeitungsvorrichtung, wobei die Speichervorrichtung Instruktionen speichert, die von der
Datenverarbeitungsvorrichtung ausführbar sind und die bei einer solchen Ausführung bewirken, dass die Datenverarbeitungsvorrichtung Operationen durchführt,
umfassend:
Empfangen eines Satzes von Codegruppen, die jeweils Quellcode umfassen;
für jede Codegruppe:
Bestimmen einer Stufe an Komplexität von Methoden innerhalb des Quellcodes, der in der Codegruppe enthalten ist;
Klassifizieren der Codegruppe als eine Hochkomplexitäts-Codegruppe, wenn die Stufe an Komplexität einen ersten Schwellenwert erfüllt;
Bestimmen einer Anzahl an Attributen von anderen Codegruppen, von denen Mitglieder der Codegruppe abhängen;
Klassifizieren der Codegruppe als eine Hochabhängigkeits-Codegruppe, wenn die Anzahl an Attributen von anderen Codegruppen, von denen Mitglieder der Codegruppe abhängen, einen zweiten Schwellenwert erfüllt; und
Bestimmen einer Stufe an Kohäsion für die Codegruppe, basierend auf einer oder mehreren Kohäsionsmetriken;
Klassifizieren der Codegruppe als eine Niedrigkohäsions-Codegruppe, wenn die Stufe an Kohäsion einen dritten Schwellenwert erfüllt;
Klassifizieren der Codegruppe als eine Niedrigqualitäts-Codegruppe, wenn die Codegruppe eine Hochkomplexitäts-Codegruppe, eine Hochabhängigkeits-Codegruppe und eine Niedrigkohäsions-Codegruppe ist; und
Aktualisieren einer Benutzerschnittstelle (310) um Daten zu präsentieren, die jede Codegruppe identifizieren, die als eine Niedrigqualitäts-Codegruppe klassifiziert ist.

12. System nach Anspruch 11, wobei Ausführung der Instruktionen bewirkt, dass die Datenverarbeitungsvorrichtung Operationen durchführt, die in einem oder mehreren der Ansprüche 2 bis 9 definiert sind.

## Revendications

1. Procédé mis en oeuvre par ordinateur comprenant les étapes consistant à :
recevoir un ensemble de groupes de codes comprenant chacun un code source ;
pour chaque groupe de codes :
déterminer un niveau de complexité de méthodes au sein du code source inclus dans le groupe de codes ;
classer le groupe de codes en tant que groupe de codes à complexité élevée chaque fois que le niveau de complexité atteint un premier seuil ;
déterminer un nombre d'attributs d'autres groupes de codes dont dépendent des éléments du groupe de codes ;
classifier le groupe de codes en tant que groupe de codes à dépendance élevée chaque fois que le nombre d'attributs d'autres groupes de codes dont dépendent les éléments du groupe de codes atteint un second seuil ; et
déterminer un niveau de cohésion pour le groupe de codes sur la base d'une ou de plusieurs métriques de cohésion ;
classer le groupe de codes en tant que groupe de codes à faible cohésion chaque fois que le niveau de cohésion atteint un troisième seuil ;
classer le groupe de codes en tant que groupe de codes de faible qualité chaque fois que le groupe de codes est un groupe de codes à complexité élevée, un groupe de codes à dépendance élevée et un groupe de codes à faible cohésion ; et
mettre à jour une interface utilisateur (310) pour présenter des données identifiant chaque groupe de codes classé en tant que groupe de codes de faible qualité.

2. Procédé selon la revendication 1, dans lequel chaque groupe de codes comprend au moins l'un des éléments suivants (i) une classe de programmation orientée objet, (ii) un procédé, ou (iii) un progiciel.

3. Procédé selon la revendication 1 ou 2, dans lequel la détermination du niveau de complexité des méthodes au sein du code source inclus dans un groupe de codes donné comprend la détermination d'un nombre d'occurrences d'un ou de plusieurs types de portions de code incluses dans le groupe de codes sur la base d'une ou de plusieurs règles spécifiant les types de portions de code.

4. Procédé selon la revendication 3, dans lequel lesdites une ou plusieurs règles comprennent au moins une règle personnalisée spécifiée par un utilisateur pour l'ensemble de groupes de codes.

5. Procédé selon la revendication 4, dans lequel le niveau de complexité des méthodes au sein du code source inclus dans le groupe de codes donné est basé sur une valeur pondérée spécifique à chaque type de portion de code et un numéro de chaque portion de code incluse dans le groupe de codes.

6. Procédé selon l'une quelconque des revendications précédentes, comprenant en outre :
pour chaque groupe de codes les étapes consistant à :
déterminer un nombre d'attributs d'autres groupes de codes auxquels on accède en faisant appel à des procédés d'accès du groupe de codes ; et
classer le groupe de codes en tant que groupe de codes à dépendance élevée chaque fois que le nombre d'attributs d'autres groupes de codes auxquels on accède en faisant appel à des procédés d'accès du groupe de codes atteint un quatrième seuil.

7. Procédé selon l'une quelconque des revendications précédentes, dans lequel un élément d'un groupe de codes donné dépend d'un attribut d'un autre groupe de codes lorsque l'élément accède à un attribut d'un autre groupe de codes différent du groupe de codes donné.

8. Procédé selon l'une quelconque des revendications précédentes, dans lequel la détermination d'un niveau de cohésion pour le groupe de codes sur la base d'une ou plusieurs métriques de cohésion comprend les étapes consistant à :
déterminer un nombre de paires d'éléments dans le groupe de codes qui accèdent à au moins un attribut du groupe de codes en commun, dans lequel le groupe de codes est classé en tant que groupe de codes à faible cohésion chaque fois que le nombre de paires d'éléments dans le groupe de codes qui accèdent à au moins un attribut du groupe de codes atteint le troisième seuil.

9. Procédé selon la revendication 8, dans lequel le nombre de paires d'éléments dans le groupe de codes qui accèdent à au moins un attribut du groupe de codes en commun atteint le troisième seuil chaque fois que le nombre de paires d'éléments dans le groupe de codes qui accèdent à au moins un attribut du groupe de codes en commun est inférieur ou égal au troisième seuil.

10. Instructions de programme informatique qui, lorsqu'elles sont exécutées par un ou plusieurs ordinateurs, amènent lesdits un ou plusieurs ordinateurs à réaliser le procédé selon l'une quelconque des revendications précédentes.

11. Système (130) comprenant :
un appareil de traitement de données ; et
un appareil de stockage de mémoire en communication de données avec l'appareil de traitement de données, l'appareil de stockage de mémoire stockant des instructions exécutables par l'appareil de traitement de données et qui lors d'une telle exécution amènent l'appareil de traitement de données à réaliser des opérations comprenant les étapes consistant à :
recevoir un ensemble de groupes de codes comprenant chacun un code source ;
pour chaque groupe de codes :
déterminer un niveau de complexité de méthodes au sein du code source inclus dans le groupe de codes ;
classer le groupe de codes en tant que groupe de codes à complexité élevée chaque fois que le niveau de complexité atteint un premier seuil ;
déterminer un nombre d'attributs d'autres groupes de codes dont dépendent les éléments du groupe de codes ;
classifier le groupe de codes en tant que groupe de codes à dépendance élevée chaque fois que le nombre d'attributs d'autres groupes de codes dont dépendent les éléments du groupe de codes atteint un second seuil ; et
déterminer un niveau de cohésion pour le groupe de codes sur la base d'une ou de plusieurs métriques de cohésion ;
classer le groupe de codes en tant que groupe de codes à faible cohésion chaque fois que le niveau de cohésion atteint un troisième seuil ;
classer le groupe de codes en tant que groupe de codes de faible qualité chaque fois que le groupe de codes est un groupe de codes à complexité élevée, un groupe de codes à dépendance élevée et un groupe de codes à faible cohésion ; et
mettre à jour une interface utilisateur (310) pour présenter des données identifiant chaque groupe de codes classé en tant que groupe de codes de faible qualité.

12. Système selon la revendication 11, dans lequel l'exécution des instructions amène l'appareil de traitement de données à réaliser des opérations définies dans l'une ou plusieurs des revendications 2 à 9.
